# EUROPEAN PATENT SPECIFICATION

(11) **EP 4 379 312 B1**
(45) Date of publication and mention of the grant of the patent: **11.06.2025**
(21) Application number: 22211202.1
(22) Date of filing: 02.12.2022
(51) Int. Cl.: G01B 5/00, G01B 11/25

(54) **SYSTEM AND METHOD FOR HANDLING A THERMAL COMPENSATION**
SYSTEM UND VERFAHREN ZUR HANDHABUNG EINER THERMISCHEN KOMPENSATION
SYSTÈME ET PROCÉDÉ DE GESTION D'UNE COMPENSATION THERMIQUE

(43) Date of publication of application: 05.06.2024
(73) Proprietor: Himax Technologies Limited, Tainan City 74148 (TW)
(72) Inventor: CHANG, Nai-Ting, 74148 Tainan City (TW); LIU, Yi-Nung, 74148 Tainan City (TW)
(74) Representative: Hoefer & Partner Patentanwälte mbB

(56) References cited:
- CN-A- 115 205 128
- US-A1- 2015 124 055
- US-A1- 2018 061 056
- US-A1- 2018 234 673

## Description

### Field of the Invention

The present invention is related to a system and a method used in a structured light 3D system, and more particularly, to a system and a method of handling a thermal compensation of the structured light 3D system.

### Background of the Invention

A structured light 3D system consists of a projecting device, an image capturing device and a processing device. The processing device generates a depth map according to a reference image associated with the projecting device and a captured image from the image capturing device. The image capturing device and the projecting device are sensitive to changes in the temperature and the component warm-up. The thermal effect leads to the distortion in the projected image of the projecting device and the pixel drifts in the captured image and the reference image. Thus, how to handle the thermal compensations on the projecting device and the image capturing device to obtain an accurate depth map is an important problem to be solved.
US 2018/234673 A1 discloses a method and apparatus for performing temperature compensation for thermal distortions in a camera system.
US 2015/124055 A1 discloses a high-accuracy three-dimensional measurement by performing an appropriate calibration in accordance with various temperature changes.
CN 115 205 128 A discloses a medium for temperature drift correction of a depth camera based on structured light.

### Summary of the Invention

This in mind, the present invention aims at providing a system and method for handling a thermal compensation to solve the abovementioned problem.

This is achieved by a system and method for handling a thermal compensation according to the independent claims, respectively. The dependent claims pertain to corresponding further developments and improvements.

As will be seen more clearly from the detailed description following below, a claimed system for handling a thermal compensation comprises: an image capturing device comprising a capturing circuit, configured for capturing a first image, and a first sensing circuit, configured for detecting a first temperature of the image capturing device; a projecting device comprising a second sensing circuit, configured for detecting a second temperature of the projecting device; a storage device, configured for storing a plurality of first parameters associated with the image capturing device, a plurality of second parameters associated with the projecting device and a reference image associated with the projecting device; and a processing device comprising a processing circuit, configured for compensating the first image according to the first temperature and the plurality of first parameters, to generate a first compensated image, compensating the reference image according to the second temperature and the plurality of second parameters, to generate a second compensated image, and generating a second image according to the first compensated image and the second compensated image.

A claimed method for handling a thermal compensation comprises: capturing a first image; detecting a first temperature of an image capturing device; detecting a second temperature of a projecting device; storing a plurality of first parameters associated with the image capturing device, a plurality of second parameters associated with the projecting device and a reference image associated with the projecting device; compensating the first image according to the first temperature and the plurality of first parameters, to generate a first compensated image; compensating the reference image according to the second temperature and the plurality of second parameters, to generate a second compensated image; and generating a second image according to the first compensated image and the second compensated image.

### Brief Description of the Drawings

In the following, the invention is further illustrated by way of example, taking reference to the following drawings.
FIG. 1 is a schematic diagram of a system according to an embodiment of the present invention.
FIG. 2 is a schematic diagram of a system according to an embodiment of the present invention.
FIG. 3 is a relationship diagram between pixel shift parameters and temperatures of an image capturing device according to an embodiment of the present invention.
FIG. 4 is a relationship diagram between pixel shift parameters and temperatures of a projecting device according to an embodiment of the present invention.
Fig. 5 is a flowchart of a process according to an example of the present invention.
Fig. 6 is a flowchart of a process according to an example of the present invention.

### Detailed Description

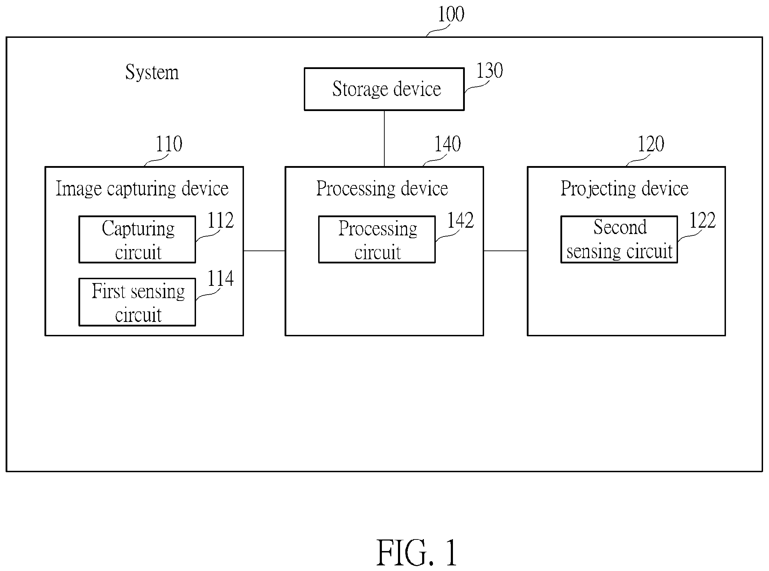

FIG. 1 is a schematic diagram of a system 100 according to an embodiment of the present invention. The system 100 may be a structured light 3D system. In FIG. 1, the system 100 comprises an image capturing device 110, a projecting device 120, a storage device 130 and a processing device 140. The image capturing device 110 comprises a capturing circuit 112 and a first sensing circuit 114. The capturing circuit 112 is configured for capturing a first image. The first sensing circuit 114 is configured for detecting (e.g., measuring) a first temperature of the image capturing device 110. The projecting device 120 comprises a second sensing circuit 122. The second sensing circuit 122 is configured for detecting (e.g., measuring) a second temperature of the projecting device 120. The storage device 130 is configured for storing a plurality of first parameters associated with the image capturing device 110, a plurality of second parameters associated with the projecting device 120 and a reference image (e.g., a ground truth image) associated with the projecting device 120. The processing device 140 is coupled to the image capturing device 110, the projecting device 120 and the storage device 130, and comprises a processing circuit 142. The processing circuit 142 is configured for compensating the first image according to the first temperature and the plurality of first parameters, to generate a first compensated image, compensating the reference image according to the second temperature and the plurality of second parameters, to generate a second compensated image, and generating a second image (e.g., a depth map) according to the first compensated image and the second compensated image.

In one embodiment, the image capturing device 110 is a monitor, a video camera, a camera or any of the above combinations, but is not limited herein. In one embodiment, the projecting device 120 is a bioscope, a projector or any of the above combinations, but is not limited herein. In one embodiment, the storage device 130 is externally connected to the processing device 140, or arranged in the processing device 140, but is not limited herein. In one embodiment, the first/second sensing circuit 114/122 is a sensor (e.g., a thermometer) for detecting a temperature of a device, but is not limited herein.

In one embodiment, the projecting device 120 further comprises a projecting circuit. The projecting circuit is configured for projecting a design image (e.g., a reference image). In one embodiment, the processing device 140 further comprises a receiving circuit. The receiving circuit is configured for receiving the first image and the first temperature from the image capturing device 110, receiving the second temperature from the projecting device 120, and receiving the plurality of first parameters, the plurality of second parameters and the reference image from the storage device 130. In one embodiment, the receiving circuit is a central processing unit (CPU) which receives (e.g., obtains, loads) data from other device/circuit, but is not limited herein.

In one embodiment, the step of compensating the first image according to the first temperature and the plurality of first parameters to generate the first compensated image comprises: generating a first interpolated image according to the first temperature and the plurality of first parameters (e.g., by using an interpolation method), and compensating the first image according to the first interpolated image, to generate the first compensated image. In one embodiment, the step of compensating the reference image according to the second temperature and the plurality of second parameters to generate the second compensated image comprises: generating a second interpolated image according to the second temperature and the plurality of second parameters (e.g., by using the interpolation method), and compensating the reference image according to the second interpolated image, to generate the second compensated image. In one embodiment, the processing circuit 142 generates the second image by using a depth decoding for the first compensated image and the second compensated image.

In one embodiment, the plurality of first parameters comprises a first relation (e.g., a table) between the first temperature and a first pixel shift of the first image. In one embodiment, the plurality of first parameters comprises a plurality of first pixel shift parameters of the first image, and the plurality of first pixel shift parameters are associated with the first temperature. In one embodiment, the plurality of first parameters comprises a plurality of first lens distortion coefficients of the image capturing device 110, and the plurality of first lens distortion coefficients are associated with the first temperature. The first relation and the plurality of first lens distortion coefficients may be combined into a table stored by the storage device 130, but are not limited herein.

In one embodiment, the plurality of second parameters comprises a second relation (e.g., a table) between the second temperature and a second pixel shift of the reference image. In one embodiment, the plurality of second parameters comprises a plurality of second pixel shift parameters of the reference image, and the plurality of second pixel shift parameters are associated with the second temperature.

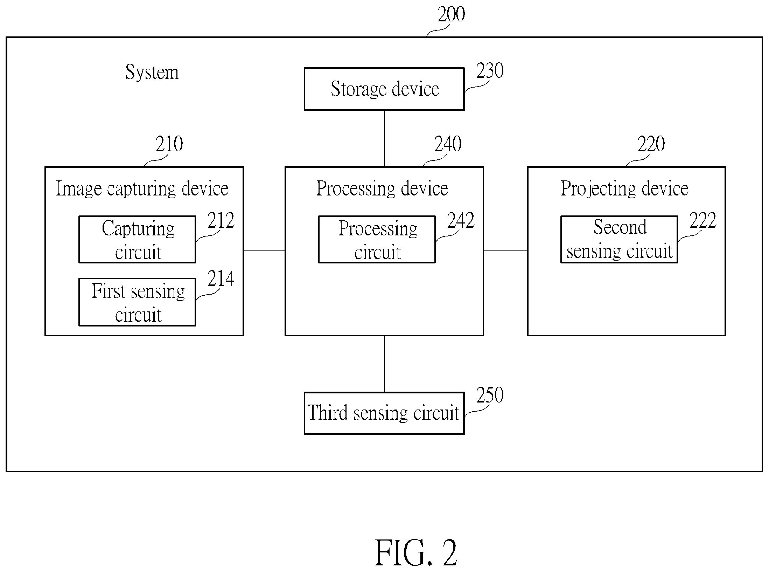

FIG. 2 is a schematic diagram of a system 200 according to an embodiment of the present invention. The system 200 may be a structured light 3D system. In FIG. 2, the system 200 comprises an image capturing device 210, a projecting device 220, a storage device 230, a processing device 240 and a third sensing circuit 250. The image capturing device 210 comprising a capturing circuit 212 and a first sensing circuit 214, the projecting device 220 comprising a second sensing circuit 222, the storage device 230 and the processing device 240 comprising a processing device 242 can be referred to the image capturing device 110, the projecting device 120, the storage device 130 and the processing device 140 in FIG. 1, respectively. The embodiments in FIG. 1 can be applied to FIG. 2, and are not narrated herein for brevity. In FIG. 2, the third sensing circuit 250 is configured for detecting (e.g., measuring) an ambient temperature (e.g., an environment temperature). In one embodiment, the third sensing circuit 250 is a sensor (e.g., a thermometer) for detecting the temperature, but is not limited herein.

In FIG. 2, the storage device 230 stores a plurality of third parameters associated with the image capturing device 210 and the ambient temperature, and stores a plurality of fourth parameters associated with the projecting device 220 and the ambient temperature. The processing circuit 242 compensates the first image according to the first temperature, the plurality of first parameters, the ambient temperature and the plurality of third parameters, to generate the first compensated image. The processing circuit 242 compensates the reference image according to the second temperature, the plurality of second parameters, the ambient temperature and the plurality of fourth parameters, to generate the second compensated image. Then, the processing circuit 242 generates the second image (e.g., the depth map) according to the first compensated image and the second compensated image.

In one embodiment, the plurality of third parameters comprises a third relation (e.g., a table) between the ambient temperature and a third pixel shift of the first image. In one embodiment, the plurality of third parameters comprises a plurality of third pixel shift parameters of the first image, and the plurality of third pixel shift parameters are associated with the ambient temperature. In one embodiment, the plurality of third parameters comprises a plurality of second lens distortion coefficients of the image capturing device 210, and the plurality of second lens distortion coefficients are associated with the ambient temperature. The third relation and the plurality of second lens distortion coefficients may be combined into a table stored by the storage device 230, but are not limited herein.

In one embodiment, the plurality of fourth parameters comprises a fourth relation (e.g., a table) between the ambient temperature and a fourth pixel shift of the reference image. In one embodiment, the plurality of fourth parameters comprises a plurality of fourth pixel shift parameters of the reference image, and the plurality of fourth pixel shift parameters are associated with the ambient temperature.

The above pixel shift parameters (e.g., the plurality of first pixel shift parameters, the plurality of second pixel shift parameters, the plurality of third pixel shift parameters and the plurality of fourth pixel shift parameters) may be measured by the polynomial equation(s) for the image capturing device 110/210 and/or the projecting device 120/220, but are not limited herein. The above pixel shift parameters may be measured in a chamber, but are not limited herein.

In FIG. 1, the system 100 considers the component self-heating of the image capturing device 110 and the projecting device 120, and compensates the image captured by the image capturing device 110 and the reference image associated with the projecting device 120 according to the parameters associated with the temperatures of the image capturing device 110 and the projecting device 120. In FIG. 2, the system 200 not only considers the component self-heating of the image capturing device 210 and the projecting device 220, but also considers the ambient temperature. Accordingly, the system 200 compensates the image captured by the image capturing device 210 and the reference image associated with the projecting device 220 according to the parameters associated with the ambient temperature and the parameters associated with the temperatures of the image capturing device 210 and the projecting device 220. That is, the system 100 may be realized when the ambient temperature is unchanged (e.g., the ambient temperature is a constant) or the change in the ambient temperature is negligibly small (e.g., the temperature difference is smaller than 3 degree), while the system 200 may be realized when the ambient temperature is changed (e.g., the ambient temperature is not a constant).

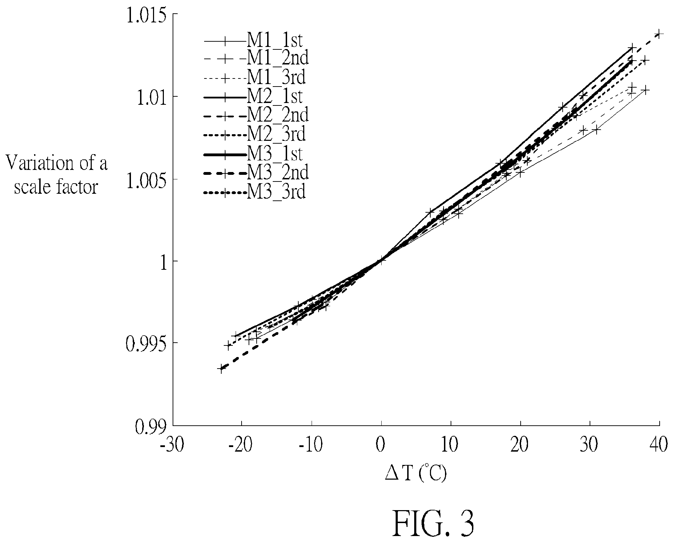

FIG. 3 is a relationship diagram between pixel shift parameters and temperatures of an image capturing device according to an embodiment of the present invention. FIG. 3 may be the plurality of first parameters in FIGs. 1-2, and shows an X-axis and a Y-axis. The X-axis represents a temperature difference (ΔT) of a reference temperature (e.g., 20 degrees) and a temperature of the image capturing device 110/210. The Y-axis represents a pixel shift parameter (a variation of a scale factor) for the image capturing device 110/210. The pixel shift parameter is measured in a chamber according to modules M1-M3 and three times per module. The modules M1-M3 are performed via the same scale factor. The modules M1-M3 represent different conditions (e.g., different polynomial equations) for the image capturing device 110/210.

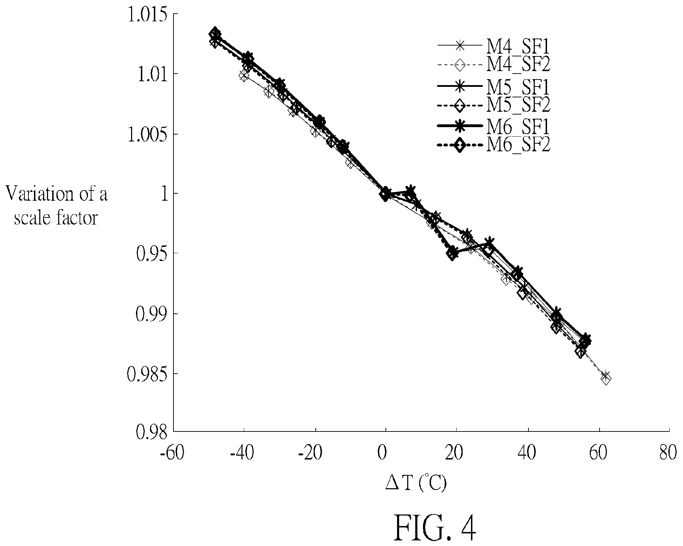

FIG. 4 is a relationship diagram between pixel shift parameters and temperatures of a projecting device according to an embodiment of the present invention. FIG. 4 may be the plurality of second parameters in FIGs. 1-2, and shows an X-axis and a Y-axis. The X-axis represents a temperature difference (ΔT) of a reference temperature (e.g., 20 degrees) and a temperature of the projecting device 120/220. The Y-axis represents a pixel shift parameter (a variation of a scale factor) for the projecting device 120/220. The pixel shift parameter is measured in a chamber according to modules M4-M6, and the modules M4-M6 are performed via scale factors SF1 and SF2. The modules M4-M6 represent different conditions (e.g., different polynomial equations) for the projecting device 120/220.

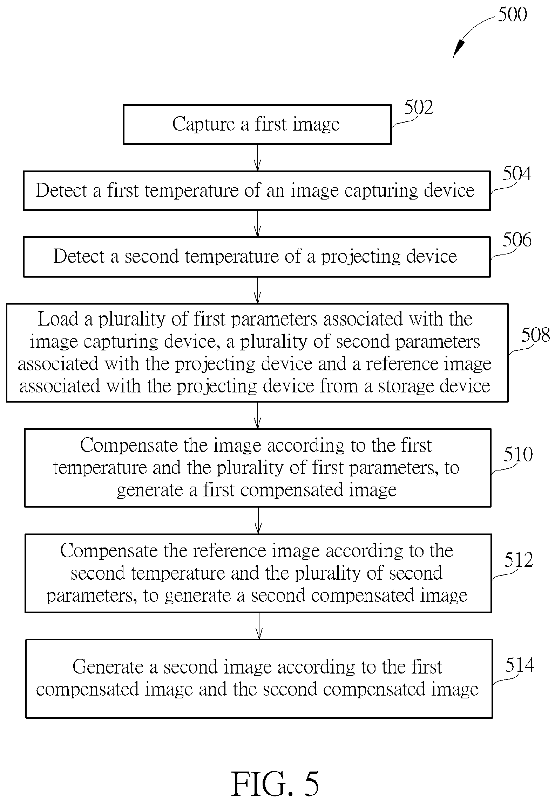

Fig. 5 is a flowchart of a process 500 according to an example of the present invention, for illustrating the operations of the system 100. The process 500 includes the following steps:

| | |
|---|---|
| Step 502: | Capture a first image. |
| Step 504: | Detect a first temperature of an image capturing device. |
| Step 506: | Detect a second temperature of a projecting device. |
| Step 508: | Load a plurality of first parameters associated with the image capturing device, a plurality of second parameters associated with the projecting device and a reference image associated with the projecting device from a storage device. |
| Step 510: | Compensate the image according to the first temperature and the plurality of first parameters, to generate a first compensated image. |
| Step 512: | Compensate the reference image according to the second temperature and the plurality of second parameters, to generate a second compensated image. |
| Step 514: | Generate a second image according to the first compensated image and the second compensated image. |

The process 500 is used for illustrating the operations of the system 100. Detailed description and variations of the process 500 can be referred to the previous description, and are not narrated herein.

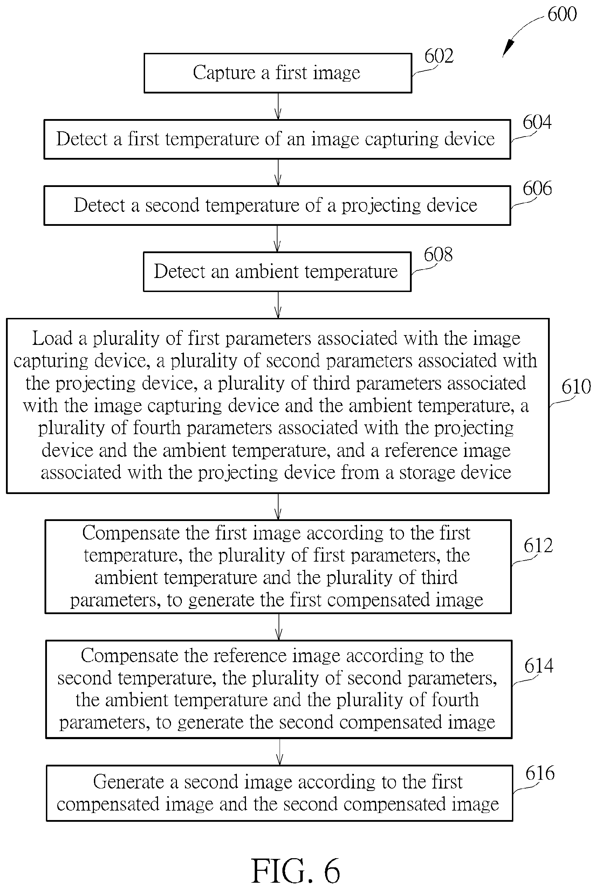

Fig. 6 is a flowchart of a process 600 according to an example of the present invention, for illustrating the operations of the system 200. The process 600 includes the following steps:

| | |
|---|---|
| Step 602: | Capture a first image. |
| Step 604: | Detect a first temperature of an image capturing device. |
| Step 606: | Detect a second temperature of a projecting device. |
| Step 608: | Detect an ambient temperature. |
| Step 610: | Load a plurality of first parameters associated with the image capturing device, a plurality of second parameters associated with the projecting device, a plurality of third parameters associated with the image capturing device and the ambient temperature, a plurality of fourth parameters associated with the projecting device and the ambient temperature, and a reference image associated with the projecting device from a storage device. |
| Step 612: | Compensate the first image according to the first temperature, the plurality of first parameters, the ambient temperature and the plurality of third parameters, to generate the first compensated image. |
| Step 614: | Compensate the reference image according to the second temperature, the plurality of second parameters, the ambient temperature and the plurality of fourth parameters, to generate the second compensated image. |
| Step 616: | Generate a second image according to the first compensated image and the second compensated image. |

The process 600 is used for illustrating the operations of the system 200. Detailed description and variations of the process 600 can be referred to the previous description, and are not narrated herein.

It should be noted that there are various realizations of the systems 100 and 200. For example, the devices/circuits mentioned above may be integrated into one or more devices/circuits. In addition, the systems 100 and 200 may be realized by hardware (e.g., circuit), software, firmware (known as a combination of a hardware device, computer instructions and data that reside as read-only software on the hardware device), an electronic system or a combination of the devices mentioned above, but are not limited herein.

To sum up, the present invention provides a system and a method for handling a thermal compensation. The system compensates the image captured by the image capturing device according to the parameters associated the temperature of the image capturing device, and compensates the reference image associated with the projecting device according to the parameters associated the temperature of the projecting device. Further, the system may compensate the image captured by the image capturing device and the reference image associated with the projecting device according to the parameters associated the ambient temperature. Thus, the thermal compensations in the system the can be overcome to obtain an accurate depth map.

## Claims

1. A system (100) for handling a thermal compensation, comprising:
an image capturing device (110), comprising:
a capturing circuit (112), configured for capturing a first image; and
a first sensing circuit (114), configured for detecting a first temperature of the image capturing device;
a projecting device (120), comprising:
a second sensing circuit (122), configured for detecting a second temperature of the projecting device;
a storage device (130), configured for storing a plurality of first parameters associated with the image capturing device, a plurality of second parameters associated with the projecting device and a reference image associated with the projecting device; and
a processing device (140), coupled to the image capturing device, the projecting device and the storage device, **characterised by**:
a processing circuit (142), configured for:
compensating the first image according to the first temperature and the plurality of first parameters, to generate a first compensated image;
compensating the reference image according to the second temperature and the plurality of second parameters, to generate a second compensated image; and
generating a second image according to the first compensated image and the second compensated image.

2. The system (100) of claim 1, **characterized in that** the projecting device further comprises:
a projecting circuit, configured for projecting a design image; and
a receiving circuit, configured for:
receiving the first image and the first temperature from the image capturing device;
receiving the second temperature from the projecting device; and
receiving the plurality of first parameters, the plurality of second parameters and the reference image from the storage device.

3. The system (100) of claim 1 or 2, **characterized in that** the step of compensating the first image according to the first temperature and the plurality of first parameters to generate the first compensated image comprises:
generating a first interpolated image according to the first temperature and the plurality of first parameters; and
compensating the first image according to the first interpolated image, to generate the first compensated image.

4. The system (100) of any of claims 1-3, **characterized in that** the step of compensating the reference image according to the second temperature and the plurality of second parameters to generate the second compensated image comprises:
generating a second interpolated image according to the second temperature and the plurality of second parameters; and
compensating the reference image according to the second interpolated image, to generate the second compensated image.

5. The system (100) of any of claims 1-4, **characterized in that** the plurality of first parameters comprises a first relation between the first temperature and a first pixel shift of the first image, and the plurality of second parameters comprises a second relation between the second temperature and a second pixel shift of the reference image.

6. The system (100) of any of claims 1-5, **characterized in that** the system further comprises:
a third sensing circuit (250), configured for detecting an ambient temperature.

7. The system (100) of claim 6, **characterized in that** the storage device stores a plurality of third parameters associated with the image capturing device and the ambient temperature, and stores a plurality of fourth parameters associated with the projecting device and the ambient temperature.

8. The system (100) of claim 7, **characterized in that** the processing circuit compensates the first image according to the first temperature, the plurality of first parameters, the ambient temperature and the plurality of third parameters, to generate the first compensated image, and compensates the reference image according to the second temperature, the plurality of second parameters, the ambient temperature and the plurality of fourth parameters, to generate the second compensated image.

9. A method for handling a thermal compensation, comprising:
capturing a first image;
detecting a first temperature of an image capturing device;
detecting a second temperature of a projecting device;
storing a plurality of first parameters associated with the image capturing device, a plurality of second parameters associated with the projecting device and a reference image associated with the projecting device; **characterised by**:
compensating the image according to the first temperature and the plurality of first parameters, to generate a first compensated image;
compensating the reference image according to the second temperature and the plurality of second parameters, to generate a second compensated image; and
generating a second image according to the first compensated image and the second compensated image.

10. The method of claim 9, **characterized in that** the method further comprises:
projecting a design image.

11. The system of claim 9 or 10, **characterized in that** the step of compensating the first image according to the first temperature and the plurality of first parameters to generate the first compensated image comprises:
generating a first interpolated image according to the first temperature and the plurality of first parameters; and
compensating the first image according to the first interpolated image, to generate the first compensated image.

12. The method of any of claims 9-11, **characterized in that** the step of compensating the reference image according to the second temperature and the plurality of second parameters to generate the second compensated image comprises:
generating a second interpolated image according to the second temperature and the plurality of second parameters; and
compensating the reference image according to the second interpolated image, to generate the second compensated image.

13. The method of any of claims 9-12, **characterized in that** the plurality of first parameters comprises a first relation between the first temperature and a first pixel shift of the first image, and the plurality of second parameters comprises a second relation between the second temperature and a second pixel shift of the reference image.

14. The method of any of claims 9-13, **characterized in that** the method further comprises:
detecting an ambient temperature;
storing a plurality of third parameters associated with the image capturing device and the ambient temperature; and
storing a plurality of fourth parameters associated with the projecting device and the ambient temperature.

15. The method of claim 14, **characterized in that** the method further comprises:
compensating the first image according to the first temperature, the plurality of first parameters, the ambient temperature and the plurality of third parameters, to generate the first compensated image; and
compensating the reference image according to the second temperature, the plurality of second parameters, the ambient temperature and the plurality of fourth parameters, to generate the second compensated image.

## Patentansprüche

1. System (100) zur Handhabung einer thermischen Kompensation, umfassend:
eine Bilderfassungsvorrichtung (110), umfassend:
eine Erfassungsschaltung (112), die zum Erfassen eines ersten Bildes konfiguriert ist; und
eine erste Detektorschaltung (114), die zum Detektieren einer ersten Temperatur der Bilderfassungsvorrichtung konfiguriert ist;
eine Projektionsvorrichtung (120), umfassend:
eine zweite Detektorschaltung (122), die zum Detektieren einer zweiten Temperatur der Projektionsvorrichtung konfiguriert ist;
eine Speichervorrichtung (130), die zum Speichern mehrerer erster Parameter, die der Bilderfassungsvorrichtung zugeordnet sind, mehrerer zweiter Parameter, die der Projektionsvorrichtung zugeordnet sind, und eines Referenzbildes, das der Projektionsvorrichtung zugeordnet ist, konfiguriert ist; und
eine Verarbeitungsvorrichtung (140), die mit der Bilderfassungsvorrichtung, der Projektionsvorrichtung und der Speichervorrichtung gekoppelt ist, **gekennzeichnet durch**:
eine Verarbeitungsschaltung (142), die konfiguriert ist zum:
Kompensieren des ersten Bildes gemäß der ersten Temperatur und den mehreren ersten Parametern, um ein erstes kompensiertes Bild zu erzeugen;
Kompensieren des Referenzbildes gemäß der zweiten Temperatur und den mehreren zweiten Parametern, um ein zweites kompensiertes Bild zu erzeugen; und
Erzeugen eines zweiten Bildes gemäß dem ersten kompensierten Bild und dem zweiten kompensierten Bild.

2. System (100) nach Anspruch 1, **dadurch gekennzeichnet, dass** die Projektionsvorrichtung ferner umfasst:
eine Projektionsschaltung, die zum Projizieren eines Darstellungsbildes konfiguriert ist; und
eine Empfangsschaltung, die konfiguriert ist zum:
Empfangen des ersten Bildes und der ersten Temperatur von der Bilderfassungsvorrichtung;
Empfangen der zweiten Temperatur von der Projektionsvorrichtung; und
Empfangen der mehreren ersten Parameter, der mehreren zweiten Parameter und des Referenzbildes von der Speichervorrichtung.

3. System (100) nach Anspruch 1 oder 2, **dadurch gekennzeichnet, dass** der Schritt des Kompensierens des ersten Bildes gemäß der ersten Temperatur und den mehreren ersten Parametern, um das erste kompensierte Bild zu erzeugen, umfasst:
Erzeugen eines ersten interpolierten Bildes gemäß der ersten Temperatur und den mehreren ersten Parametern; und
Kompensieren des ersten Bildes gemäß dem ersten interpolierten Bild, um das erste kompensierte Bild zu erzeugen.

4. System (100) nach einem der Ansprüche 1-3, **dadurch gekennzeichnet, dass** der Schritt des Kompensierens des Referenzbildes gemäß der zweiten Temperatur und den mehreren zweiten Parametern, um das zweite kompensierte Bild zu erzeugen, umfasst:
Erzeugen eines zweiten interpolierten Bildes gemäß der zweiten Temperatur und den mehreren zweiten Parametern; und
Kompensieren des Referenzbildes gemäß dem zweiten interpolierten Bild, um das zweite kompensierte Bild zu erzeugen.

5. System (100) nach einem der Ansprüche 1-4, **dadurch gekennzeichnet, dass** die mehreren ersten Parameter eine erste Beziehung zwischen der ersten Temperatur und einer ersten Pixelverschiebung des ersten Bildes umfassen und die mehreren zweiten Parameter eine zweite Beziehung zwischen der zweiten Temperatur und einer zweiten Pixelverschiebung des Referenzbildes umfassen.

6. System (100) nach einem der Ansprüche 1-5, **dadurch gekennzeichnet, dass** das System ferner umfasst:
eine dritte Detektorschaltung (250), die zum Detektieren einer Umgebungstemperatur konfiguriert ist.

7. System (100) nach Anspruch 6, **dadurch gekennzeichnet, dass** die Speichervorrichtung mehrere dritte Parameter, die der Bilderfassungsvorrichtung und der Umgebungstemperatur zugeordnet sind, und mehrere vierte Parameter, die der Projektionsvorrichtung und der Umgebungstemperatur zugeordnet sind, speichert.

8. System (100) nach Anspruch 7, **dadurch gekennzeichnet, dass** die Verarbeitungsschaltung das erste Bild gemäß der ersten Temperatur, den mehreren ersten Parametern, der Umgebungstemperatur und den mehreren dritten Parametern kompensiert, um das erste kompensierte Bild zu erzeugen, und das Referenzbild gemäß der zweiten Temperatur, den mehreren zweiten Parametern, der Umgebungstemperatur und den mehreren vierten Parametern kompensiert, um das zweite kompensierte Bild zu erzeugen.

9. Verfahren zur Handhabung einer thermischen Kompensation, umfassend:
Erfassen eines ersten Bildes;
Detektieren einer ersten Temperatur einer Bilderfassungsvorrichtung;
Detektieren einer zweiten Temperatur einer Projektionsvorrichtung;
Speichern mehrerer erster Parameter, die der Bilderfassungsvorrichtung zugeordnet sind, mehrerer zweiter Parameter, die der Projektionsvorrichtung zugeordnet sind, und eines Referenzbildes, das der Projektionsvorrichtung zugeordnet ist; **gekennzeichnet durch**:
Kompensieren des Bildes gemäß der ersten Temperatur und den mehreren ersten Parametern, um ein erstes kompensiertes Bild zu erzeugen;
Kompensieren des Referenzbildes gemäß der zweiten Temperatur und den mehreren zweiten Parametern, um ein zweites kompensiertes Bild zu erzeugen; und
Erzeugen eines zweiten Bildes gemäß dem ersten kompensierten Bild und dem zweiten kompensierten Bild.

10. Verfahren nach Anspruch 9, **dadurch gekennzeichnet, dass** das Verfahren ferner umfasst:
Projizieren eines Darstellungsbildes.

11. System nach Anspruch 9 oder 10, **dadurch gekennzeichnet, dass** der Schritt des Kompensierens des ersten Bildes gemäß der ersten Temperatur und den mehreren ersten Parametern, um das erste kompensierte Bild zu erzeugen, umfasst:
Erzeugen eines ersten interpolierten Bildes gemäß der ersten Temperatur und den mehreren ersten Parametern; und
Kompensieren des ersten Bildes gemäß dem ersten interpolierten Bild, um das erste kompensierte Bild zu erzeugen.

12. Verfahren nach einem der Ansprüche 9-11, **dadurch gekennzeichnet, dass** der Schritt des Kompensierens des Referenzbildes gemäß der zweiten Temperatur und den mehreren zweiten Parametern, um das zweite kompensierte Bild zu erzeugen, umfasst:
Erzeugen eines zweiten interpolierten Bildes gemäß der zweiten Temperatur und den mehreren zweiten Parametern; und
Kompensieren des Referenzbildes gemäß dem zweiten interpolierten Bild, um das zweite kompensierte Bild zu erzeugen.

13. Verfahren nach einem der Ansprüche 9-12, **dadurch gekennzeichnet, dass** die mehreren ersten Parameter eine erste Beziehung zwischen der ersten Temperatur und einer ersten Pixelverschiebung des ersten Bildes umfassen und die mehreren zweiten Parameter eine zweite Beziehung zwischen der zweiten Temperatur und einer zweiten Pixelverschiebung des Referenzbildes umfassen.

14. Verfahren nach einem der Ansprüche 9-13, **dadurch gekennzeichnet, dass** das Verfahren ferner umfasst:
Detektieren einer Umgebungstemperatur;
Speichern mehrerer dritter Parameter, die der Bilderfassungsvorrichtung und der Umgebungstemperatur zugeordnet sind; und
Speichern mehrerer vierter Parameter, die der Projektionsvorrichtung und der Umgebungstemperatur zugeordnet sind.

15. Verfahren nach Anspruch 14, **dadurch gekennzeichnet, dass** das Verfahren ferner umfasst:
Kompensieren des ersten Bildes gemäß der ersten Temperatur, den mehreren ersten Parametern, der Umgebungstemperatur und den mehreren dritten Parametern, um das erste kompensierte Bild zu erzeugen; und
Kompensieren des Referenzbildes gemäß der zweiten Temperatur, den mehreren zweiten Parametern, der Umgebungstemperatur und den mehreren vierten Parametern, um das zweite kompensierte Bild zu erzeugen.

## Revendications

1. Système (100) de gestion d'une compensation thermique, comprenant :
un dispositif de capture d'image (110), comprenant :
un circuit de capture (112), configuré pour capturer une première image ; et
un premier circuit de détection (114), configuré pour détecter une première température du dispositif de capture d'image ;
un dispositif de projection (120), comprenant :
un second circuit de détection (122), configuré pour détecter une seconde température du dispositif de projection ;
un dispositif de stockage (130), configuré pour stocker une pluralité de premiers paramètres associés au dispositif de capture d'image, une pluralité de seconds paramètres associés au dispositif de projection et une image de référence associée au dispositif de projection ; et
un dispositif de traitement (140), couplé au dispositif de capture d'image, au dispositif de projection et au dispositif de stockage, **caractérisé par** :
un circuit de traitement (142), configuré pour :
compenser la première image selon la première température et la pluralité de premiers paramètres, pour générer une première image compensée ;
compenser l'image de référence selon la seconde température et la pluralité de seconds paramètres, pour générer une seconde image compensée ; et
générer une seconde image selon la première image compensée et la seconde image compensée.

2. Système (100) selon la revendication 1, **caractérisé en ce que** le dispositif de projection comprend en outre :
un circuit de projection, configuré pour projeter une image de présentation; et
un circuit de réception, configuré pour :
recevoir la première image et la première température du dispositif de capture d'image ;
recevoir la seconde température du dispositif de projection ; et
recevoir la pluralité de premiers paramètres, la pluralité de seconds paramètres et l'image de référence du dispositif de stockage.

3. Système (100) selon la revendication 1 ou 2, **caractérisé en ce que** l'étape de compensation de la première image selon la première température et la pluralité de premiers paramètres pour générer la première image compensée comprend :
générer une première image interpolée selon la première température et la pluralité de premiers paramètres ; et
compenser la première image selon la première image interpolée, pour générer la première image compensée.

4. Système (100) selon l'une quelconque des revendications 1 à 3, **caractérisé en ce que** l'étape de compensation de l'image de référence selon la seconde température et la pluralité de seconds paramètres pour générer la seconde image compensée comprend :
générer une seconde image interpolée selon la seconde température et la pluralité de seconds paramètres ; et
compenser l'image de référence selon la seconde image interpolée, pour générer la seconde image compensée.

5. Système (100) selon l'une quelconque des revendications 1 à 4, **caractérisé en ce que** la pluralité de premiers paramètres comprend une première relation entre la première température et un premier décalage de pixel de la première image, et la pluralité de seconds paramètres comprend une seconde relation entre la seconde température et un second décalage de pixel de l'image de référence.

6. Système (100) selon l'une quelconque des revendications 1 à 5, **caractérisé en ce que** le système comprend en outre :
un troisième circuit de détection (250), configuré pour détecter une température ambiante.

7. Système (100) selon la revendication 6, **caractérisé en ce que** le dispositif de stockage stocke une pluralité de troisièmes paramètres associés au dispositif de capture d'image et la température ambiante, et stocke une pluralité de quatrièmes paramètres associés au dispositif de projection et la température ambiante.

8. Système (100) selon la revendication 7, **caractérisé en ce que** le circuit de traitement compense la première image selon la première température, la pluralité de premiers paramètres, la température ambiante et la pluralité de troisièmes paramètres, pour générer la première image compensée, et compense l'image de référence selon la seconde température, la pluralité de seconds paramètres, la température ambiante et la pluralité de quatrièmes paramètres, pour générer la seconde image compensée.

9. Procédé de gestion d'une compensation thermique, comprenant :
la capture d'une première image ;
la détection d'une première température d'un dispositif de capture d'image ;
la détection d'une seconde température d'un dispositif de projection ;
le stockage d'une pluralité de premiers paramètres associés au dispositif de capture d'image, d'une pluralité de seconds paramètres associés au dispositif de projection et d'une image de référence associée au dispositif de projection ; **caractérisé par** :
la compensation de l'image selon la première température et la pluralité de premiers paramètres, pour générer une première image compensée ;
compenser l'image de référence selon la seconde température et la pluralité de seconds paramètres, pour générer une seconde image compensée ; et
générer une seconde image selon la première image compensée et la seconde image compensée.

10. Procédé selon la revendication 9, **caractérisé en ce que** le procédé comprend en outre : la projection d'une image de présentation.

11. Système selon la revendication 9 ou 10, **caractérisé en ce que** l'étape de compensation de la première image selon la première température et la pluralité de premiers paramètres pour générer la première image compensée comprend :
générer une première image interpolée selon la première température et la pluralité de premiers paramètres ; et
compenser la première image selon la première image interpolée, pour générer la première image compensée.

12. Procédé selon l'une quelconque des revendications 9 à 11, **caractérisé en ce que** l'étape de compensation de l'image de référence selon la seconde température et la pluralité de seconds paramètres pour générer la seconde image compensée comprend :
générer une seconde image interpolée selon la seconde température et la pluralité de seconds paramètres ; et
compenser l'image de référence selon la seconde image interpolée, pour générer la seconde image compensée.

13. Procédé selon l'une quelconque des revendications 9 à 12, **caractérisé en ce que** la pluralité de premiers paramètres comprend une première relation entre la première température et un premier décalage de pixel de la première image, et la pluralité de seconds paramètres comprend une seconde relation entre la seconde température et un second décalage de pixel de l'image de référence.

14. Procédé selon l'une quelconque des revendications 9 à 13, **caractérisé en ce que** le procédé comprend en outre :
la détection d'une température ambiante ;
le stockage d'une pluralité de troisièmes paramètres associés au dispositif de capture d'image et la température ambiante ; et
le stockage d'une pluralité de quatrièmes paramètres associés au dispositif de projection et la température ambiante.

15. Procédé selon la revendication 14, **caractérisé en ce que** le procédé comprend en outre :
la compensation de la première image selon la première température, la pluralité de premiers paramètres, la température ambiante et la pluralité de troisièmes paramètres, pour générer la première image compensée ; et
la compensation de l'image de référence selon la seconde température, la pluralité de seconds paramètres, la température ambiante et la pluralité de quatrièmes paramètres, pour générer la seconde image compensée.
